Europäisches Patentamt

European Patent Office

Office européen des brevets

(11) Numéro de publication : **0 024 977**
**B1**

(12) **FASCICULE DE BREVET EUROPÉEN**

(45) Date de publication du fascicule du brevet :
13.07.83

(51) Int. Cl.³ : **G 01 C 19/44**, G 01 C 19/54,
G 01 C 25/00

(21) Numéro de dépôt : **80401190.6**

(22) Date de dépôt : **13.08.80**

(54) **Procédé et dispositif de mise à poste d'un gyroscope de verticale.**

(30) Priorité : 03.09.79 FR 7922006

(43) Date de publication de la demande :
**11.03.81 Bulletin 81/10**

(45) Mention de la délivrance du brevet :
**13.07.83 Bulletin 83/28**

(84) Etats contractants désignés :
**BE CH DE GB IT LI NL SE**

(56) Documents cités :
**FR A 1 078 486**
**US A 2 654 254**

(73) Titulaire : **Société Nationale Industrielle Aerospatiale**
**Société anonyme dite:**
**37 Bld de Montmorency**
**F-75016 Paris (FR)**

(72) Inventeur : **Jouaillec, Joseph**
**80 avenue de Paris**
**F-78000 Versailles (FR)**

(74) Mandataire : **Bonnetat, Christian**
**Cabinet PROPI Conseils 23 rue de Léningrad**
**F-75008 Paris (FR)**

Jouve, 18, rue St-Denis, 75001 Paris, France

Procédé et dispositif de mise à poste d'un gyroscope de verticale

La présente invention concerne un procédé de mise à poste d'un gyroscope de verticale, ainsi qu'un gyroscope mettant en application ce procédé.

Par « mise à poste », on entend la mise en fonctionnement opérationnel dudit gyroscope.

L'invention concerne plus particulièrement les gyroscopes pour missiles, engins-cibles, et engins volants non pilotés.

On sait qu'un gyroscope de verticale ou un horizon artificiel d'aéronef comprend essentiellement une toupie ou masse symétrique de révolution libre en rotation autour d'un axe, un montage de suspension dudit axe par rapport au support dudit gyroscope, des moyens d'entraînement en rotation de ladite toupie, et des moyens transducteurs de l'orientation dudit axe, par exemple par rapport à la verticale. Ledit montage de suspension confère audit axe, et donc à ladite toupie, une liberté de position angulaire totale, ou quasi totale, tout en maintenant fixe le centre de gravité de l'ensemble par rapport au support.

Lorsqu'elle ne tourne pas, la toupie est donc en équilibre astatique et peut occuper n'importe quelle position angulaire au moment de son lancement en rotation. Il y a donc lieu de recaler sa position à ce moment, c'est-à-dire de rapprocher son axe de celui de la verticale vraie. La position « calée » ou « recalée » de la toupie correspond aux zéros étalonnés desdits moyens transducteurs.

Cette opération est délicate à réaliser lorsque l'engin ou l'aéronef supportant le gyroscope est posé ou provisoirement fixé sur un support mobile et animé de mouvements aléatoires pendant le recyclage de la toupie, par exemple, lorsque le gyroscope équipe un missile tiré depuis un navire ou un hélicoptère.

C'est pourquoi, notamment dans le cas d'utilisation décrit ci-avant, deux éléments sont ajoutés aux gyroscopes :

— un mécanisme établissant un léger couple de rappel en roulis de l'ensemble mobile en roulis, lorsque la toupie est arrêtée (action sur le cadre externe qui, par la suite, est considéré comme cadre de roulis) ;

— et un mécanisme érecteur replaçant ladite toupie automatiquement en position verticale dès que celle-ci est entraînée par des moyens moteurs.

Cependant la présence du mécanisme de rappel en roulis et du mécanisme érecteur ne supprime pas toutes les difficultés comme cela est expliqué par la suite.

Aussi, pour remédier à ces inconvénients, le procédé pour la mise à poste d'un dispositif gyroscopique monté sur un mobile, tel qu'un missile, et comportant une masse de révolution tournant autour d'un axe de rotation devant servir de référence de verticale, des moyens de suspension de ladite masse permettant de suspendre ledit axe de rotation par rapport à l'axe de tangage et à l'axe de roulis dudit mobile, des moyens moteurs pour entraîner ladite masse de révolution en rotation autour de son. axe, des moyens de rappel en roulis dudit axe de rotation actifs lorsque ladite masse ne tourne pas et un système érecteur mécanique commandable à pendule rotatif entraîné, tendant à replacer automatiquement l'axe de rotation de la masse de révolution sur la verticale, procédé selon lequel on ne supprime l'action desdits moyens de rappel en roulis qu'avec un premier temps de retard par rapport à la mise en rotation de ladite masse de révolution est caractérisé en ce que l'on commence par mettre en rotation la masse de révolution et on accélère cette rotation jusqu'à ce que le moment cinétique de la masse en rotation soit suffisant pour assurer la stabilité de celle-ci, après quoi on supprime l'action desdits moyens de rappel en roulis à l'expiration dudit premier temps de retard et en ce que ledit système érecteur n'est rendu actif qu'avec un second temps de retard par rapport à la mise en rotation de ladite masse de révolution ce second temps de retard étant plus grand que le premier et étant tel qu'à son expiration le moment cinétique et la vitesse de rotation du pendule sont suffisants pour réduire le mouvement du dispositif autour de son axe de roulis, dû au mouvement de précession de l'axe de rotation de la masse de révolution autour de la verticale.

Un gyroscope, tel que celui de l'invention, destiné à être monté à bord d'un missile transporté sur un bateau ou un hélicoptère, n'est démarré qu'après un certain temps de navigation de l'engin porteur ; à ce moment là, ledit porteur est en mouvement.

Dans le document FR-A-1 078 486, on décrit un dispositif gyroscopique monté sur un mobile et comportant une masse de révolution tournant autour d'un axe de rotation à utiliser comme référence de verticale, des moyens de suspension de ladite masse permettant de suspendre ledit axe de rotation par rapport à l'axe de tangage (ou parallèle à celui-ci) et à l'axe de roulis (ou parallèle à celui-ci), un moteur électrique pour entraîner la masse en rotation et des moyens électriques de rappel en roulis actifs lorsque ladite masse ne tourne pas. Cependant, un tel gyroscope est totalement impropre à une utilisation sur missiles transportés.

En effet, selon le brevet FR-A-1 078 486, le démarrage de la toupie du gyroscope décrit ne commence qu'avec un retard de plusieurs secondes, ce qui accroît son temps de mise à poste. Il ne comporte pas de moyens de blocage en dehors des périodes d'utilisation. Le dispositif de verrouillage ne peut exercer un couple de rappel que dans un secteur angulaire très limité, ce qui le rend inopérant pour des écarts importants, notamment en l'absence d'utilisation des détecteurs « Selsyns » comme moteurs-couple. De plus, la constitution de ce verrouillage le rend inutilisable sur un gyroscope. de missiles transportés du fait de la souplesse de la lame de verrouillage qui procurerait une mauvaise tenue aux vibrations.

L'érecteur utilisé ne peut pas être commandé, et les billes mobiles qu'il comporte peuvent prendre des positions provoquant un certain balourd, d'où apparition de couples assez élevés pour compromettre le recalage de la toupie, lors du démarrage d'un tel gyroscope sur un support en mouvement, même en utilisant les « Selsyns » comme moteurs-couple.

Un dispositif pour la mise en œuvre du procédé selon l'invention, monté sur un mobile, tel qu'un missile, et comportant une masse de révolution tournant autour d'un axe de rotation devant servir de référence à la verticale, des moyens de suspension de ladite masse permettant de suspendre ledit axe de rotation par rapport à l'axe de tangage et à l'axe de roulis dudit mobile, des moyens moteurs pour entraîner ladite masse de révolution en rotation autour de son axe, des moyens de rappel en roulis dudit axe de rotation actifs lorsque ladite masse ne tourne pas et un système érecteur mécanique à pendule rotatif entraîné tendant à replacer automatiquement l'axe de rotation de la masse sur la verticale, dispositif dans lequel lesdits moyens moteurs et lesdits moyens de rappel sont électriques, est caractérisé en ce que le système érecteur comporte des moyens de commande électrique, en ce que les moyens moteurs, les moyens de rappel et les moyens de commande dudit système érecteur sont commandés en parallèle à partir d'une source d'alimentation commune, en ce qu'un premier dispositif à retard est disposé sur la liaison entre ladite source et lesdits moyens de rappel en roulis, ce premier retard étant tel qu'à son expiration le moment cinétique de la masse en rotation est suffisant pour assurer la stabilité de celle-ci, et en ce qu'un second dispositif à retard est disposé sur la liaison entre ladite source et lesdits moyens de commande du système érecteur, ce second retard étant tel qu'à son expiration la vitesse de rotation du pendule est suffisante pour réduire le mouvement de précession du dispositif autour de son axe de roulis.

Les figures du dessin annexé feront bien comprendre comment l'invention peut être réalisée.

La figure 1 illustre schématiquement le principe de moyens connus pour le rappel en roulis de l'équipage de suspension d'une toupie rotative d'un dispositif gyroscopique.

Les figures 2 et 3 illustrent schématiquement le principe de moyens érecteurs connus pour amener automatiquement ladite toupie. en position verticale dès que celle-ci est entraînée par ses moyens moteurs, les figures 2 et 3 montrant respectivement l'axe de la toupie en position verticale et en position écartée de la verticale.

La figure 4 montre, en coupe diamétrale, un exemple de réalisation de moyens érecteurs associés à une toupie et à son boîtier.

La figure 5 est une vue de dessus du dispositif de la figure 4.

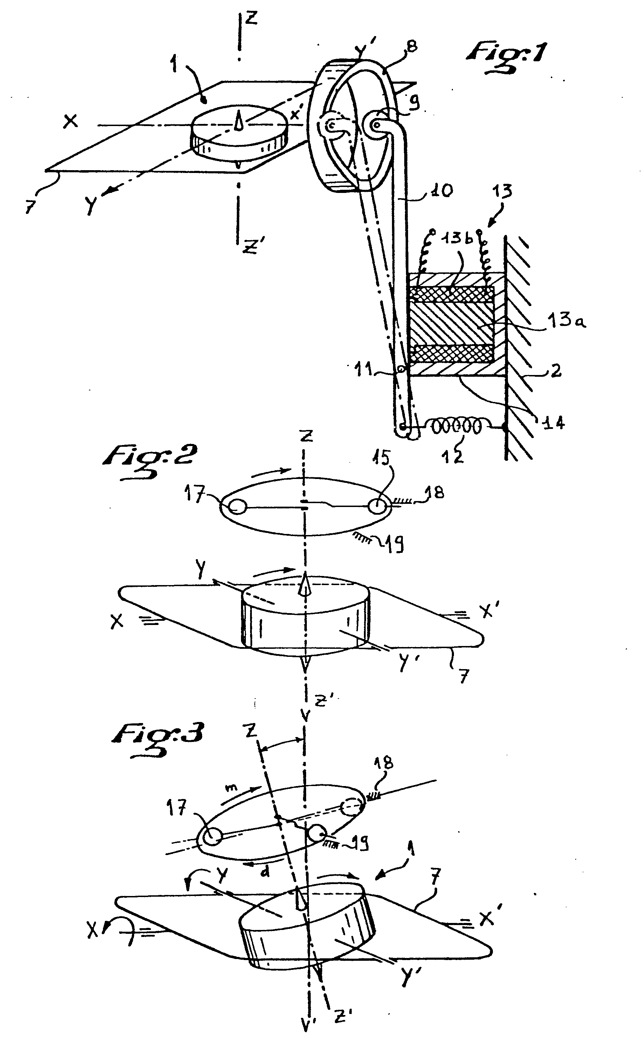

Le dispositif gyroscopique, de type connu et montré sur le dessin, comporte une toupie 1, enfermée dans un boîtier 2 et susceptible d'être entraînée en rotation autour de son arbre 3 d'axe Z-Z' par un moteur électrique 4 logé dans ledit boîtier (voir la figure 4). Le boîtier 2 comporte des tourillons alignés 5 et 6, lui permettant de pivoter autour de l'axe de tangage Y-Y' du véhicule (non représenté) sur lequel est monté ledit dispositif gyroscopique.

Les tourillons 5 et 6 servent à articuler le boîtier 2 et sa toupie 1 sur un cadre 7, lui-même articulé autour de l'axe de roulis X-X' dudit véhicule. Le cadre 7 n'est pas représenté sur la figure 4.

Les connexions d'alimentation et de commande du moteur 4 passent, de façon connue, à travers les tourillons 5 et 6 de l'axe Y-Y' et ceux (non représentés) de l'axe X-X' du cadre 7.

Le cadre 7 de suspension en roulis est solidaire d'une came cylindrique 8 sur laquelle roule un galet 9 monté libre en rotation sur un bras 10 articulé sur un axe 11 solidaire du boîtier 2 dudit dispositif gyroscopique. La came 8 est centrée sur l'axe de roulis X-X'. Un ressort 12 accroché entre l'extrémité du bras 10 opposée au galet 9, et ledit boîtier tend à appliquer avec une force déterminée le galet 9 contre la surface opérative de la came (position en pointillés sur la figure 1). La forme de la came 8 est telle que lorsque ledit galet 9 appuie sur sa surface opérative, le cadre 7 est automatiquement ramené et maintenu à l'horizontale relative du boîtier 2 (roulis nul). Un électro-aimant 13 est susceptible de supprimer l'action du galet 9 lorsqu'il est activé, en attirant contre son armature 13a le bras 10 supportant le galet 9. L'armature 13a et l'enroulement 13b sont rendus solidaires du boîtier 2 par un carter 14.

Lorsque l'électro-aimant 13 est activé, le cadre de roulis 7 est libre et, par suite, la toupie 1 est libre également en roulis. Lorsqu'il est désactivé, le galet 9 s'applique sur la came 8 et fait revenir et rester ledit cadre 7 et ladite toupie 1 à la position horizontale relative à l'engin supportant le dispositif gyroscopique.

Dans la technique connue, l'électro-aimant 13 est activé en synchronisme avec le lancement de la toupie par le moteur 4.

Par suite, le couple de rappel autour de l'axe X-X' est supprimé en même temps que la mise en rotation de la toupie 1 et il apparaît très souvent un mouvement en spirale de ladite toupie au départ, ce qui a pour inconvénient de laisser subsister un écart important autour de l'axe X-X', cet écart — qui dépasse parfois 50° — ne pouvant être corrigé ensuite que par le travail de l'érecteur.

Ce mouvement en spirale au démarrage est provoqué par la composante, autour de l'axe X-X', du couple de réaction du moteur de toupie 4, cette composante étant d'autant plus importante que l'écart angulaire autour de l'axe Y-Y' est important au moment de la mise sous tension du moteur 4.

Il en résulte que le temps de mise à poste d'un dispositif gyroscopique de verticale atteint une dizaine de minutes.

En introduisant, conformément à la présente invention, un retard t1 (d'environ 3 secondes par exemple) avant de libérer le cadre 7 du gyroscope et après avoir lancé la toupie 1, on supprime le mouvement en spirale au départ, grâce à l'existence du couple de rappel autour de l'axe X-X', qui empêche l'amorce de ce mouvement en spirale, alors que le moment cinétique est encore trop faible pour assurer la stabilité du gyroscope. La différence, c'est-à-dire le gain sur le temps de mise à poste, est un paramètre très important dans le cas d'un système d'arme anti-navire par exemple, pour lequel le temps de réaction du système peut constituer un paramètre décisif. On peut dire que l'introduction du retard t1 sur le même gyroscope fait passer le temps de mise à poste d'une dizaine de minutes à 2 minutes environ, ce qui constitue un résultat concret intéressant.

L'avantage est encore plus sensible dans le cas d'utilisation du gyroscope sur un véhicule porteur en mouvement d'oscillation avec des amplitudes angulaires importantes pendant le démarrage du gyroscope (bateau, avion ou hélicoptère par exemple), car dans ce cas, l'inclinaison résultante au démarrage autour de l'axe X-X' peut amener le gyroscope dans une configuration où son système d'érection peut être rendu inefficace — ou en tout cas, très peu efficace —, ce qui conduit à un temps de mise à poste prohibitif, alors que, selon l'invention, le gyroscope reste utilisable avec un temps de mise à poste de quelques minutes, même avec un support présentant des amplitudes d'oscillation de 30° autour de l'horizontale.

Sur les figures 2 à 5, on a illustré un mécanisme érecteur connu pour dispositif gyroscopique, le dispositif de rappel en roulis 8 à 14, n'étant pas représenté sur ces figures.

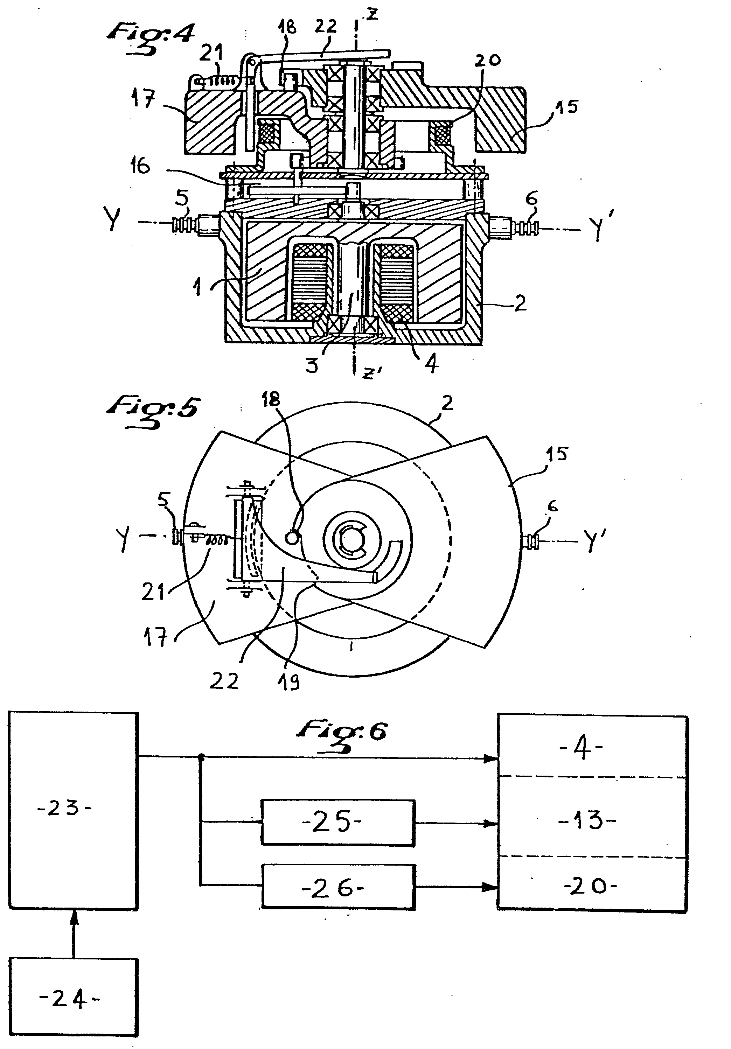

Comme le montrent les figures 4 et 5, ce mécanisme érecteur pour dispositif gyroscopique de verticale comprend essentiellement, un pendule instable 15 articulé autour de l'axe de rotation ZZ' de la toupie 1, ce pendule instable étant entraîné dans le même sens que la toupie 1 par un réducteur à engrenages 16 qui est entraîné à partir de l'arbre 3 et qui fait tourner à vitesse constante d'environ 40 tours par minute, lorsque la toupie tourne par exemple à 23 000 tours par minute, un contre-poids 17 de forme analogue au pendule 1, articulé autour du même axe, et surtout de masse équivalente, de façon à constituer avec lui un ensemble dont le centre de gravité est situé sur l'axe de rotation ZZ' de la toupie, quand le pendule instable 15 est aligné avec le contre-poids 17. Ce dernier cas est réalisé lorsque le gyroscope est stabilisé à la verticale et le système d'érection n'applique alors aucun couple au gyroscope. C'est le cas illustré schématiquement par la figure 2.

Dans son plan de rotation, perpendiculaire à l'axe de rotation ZZ' de la toupie 1, le pendule instable 15 dispose d'une liberté de débattement angulaire entre, d'une part, une butée d'entraînement 18 qui le positionne à l'alignement avec son contrepoids 17, et, d'autre part, une butée avant 19 qui limite sa course libre dans le sens du mouvement de rotation du système gyroscopique.

Dans cette dernière position du pendule (voir la figure 3) le système d'érection, n'étant plus équilibré, applique un couple au dispositif gyroscopique, ce qui a pour résultat de redresser l'axe de rotation ZZ' vers la position verticale V-V' s'il s'en était écarté.

En effet, on voit sur la figure 3 qu'en cas d'inclinaison de l'axe de rotation Z-Z' du gyroscope, dès le franchissement du point haut de la ligne de plus grande pente, le pendule instable 15 tombe contre sa butée avant 19 et s'y maintient ensuite jusqu'au franchissement du point bas de la ligne de plus grande pente du plan de rotation. A ce point bas, il attend le passage de sa butée arrière d'entraînement 18 qui le force à parcourir le demi-tour suivant (en montée m) à la vitesse constante de 40 tours par minute imposée par l'ensemble moteur 4-réducteur 16 ; après quoi, le phénomène recommence à chaque tour de l'érecteur, et à chaque tour le pendule 15 descend (descente d) donc plus rapidement qu'il ne monte de l'autre côté.

On voit que le couple résultant appliqué au gyroscope (par cette différence entre les durées de descente d et de montée m du pendule) a toujours un effet redresseur en moyenne sur un tour, c'est-à-dire, qu'il tend à chaque tour à réduire l'écart entre l'axe de rotation ZZ' et la verticale V-V'.

Pour faciliter la représentation de la figure 3, on a supposé un grand écart autour de l'axe interne Y-Y' seulement ; bien entendu, le système d'érection agit à partir d'une inclinaison très faible inférieure même à 0,1° et d'autre part, l'effet redresseur reste valable pour toute orientation de l'inclinaison par rapport à la verticale et en particulier dans le cas d'une inclinaison composée autour des deux axes de suspension Y-Y' et X-X' en même temps.

En pratique, le fonctionnement est le suivant (voir figures 4 et 5) :

En l'absence de courant dans une bobine 20 solidaire du boîtier 2 et concentrique à l'axe Z-Z', un ressort 21 maintient un cliquet 22 dans sa position basse pour laquelle il bloque le pendule instable 15 contre sa butée arrière 18 ; le système d'érection n'applique alors aucun couple sur le gyroscope puisque le centre de gravité de tout l'ensemble suspendu se trouve au point de rencontre des deux axes de suspension dont l'axe interne est Y-Y'.

Quand on alimente la bobine 20 sous une tension suffisante pour provoquer l'attraction de la palette mobile liée au cliquet 22, celui-ci vient occuper la position haute représentée sur la figure 4 et le pendule instable 15 retrouve alors sa liberté de débattement angulaire, ce qui permet à l'érecteur de fonctionner. La mise sous tension de la bobine permet donc de commander la mise en fonctionnement de l'érecteur du gyroscope.

Bien entendu, les connexions d'alimentation de la bobine 20 sont acheminées vers l'extérieur de la suspension du gyroscope en passant successivement par les tourillons 5 et 6 de l'axe interne Y-Y', puis par les tourillons (non représentés) de l'axe de suspension X-X'.

Avec un tel érecteur mécanique connu, il est avantageux conformément à l'invention, pour la mise à poste du gyroscope, de ne commander l'érection qu'avec un retard t2 sur la mise en fonctionnement du moteur 4 de la toupie 1, ce retard t2 devant être assez grand pour permettre à l'érecteur de tourner à une vitesse suffisante.

Sans ce retard t2, en effet, le pendule instable 15 (qui tourne extrêmement lentement au début du démarrage de la toupie 1) pourrait se trouver, pendant un temps non négligeable, dans une position où il exercerait un couple assez important sur le gyroscope, qui ne disposerait encore que d'un très faible moment cinétique ; dans ce cas, le gyroscope pourrait atteindre une position très difficile — voire même impossible — à corriger ensuite par l'érecteur.

Avec le retard t2, au contraire, l'érecteur étant neutralisé, il ne s'exerce aucun couple de balourd sur le gyroscope pendant le temps correspondant.

Pour une toupie atteignant son régime maximal après un temps de 90 secondes, on peut choisir t2 égal à 30 secondes.

La figure 6 donne le schéma synoptique de la commande du gyroscope selon l'invention.

Une alimentation électrique 23 est activée par une commande 24. Ladite alimentation est reliée parallèlement :

— au moteur 4 de la toupie 1 du gyroscope,

— à l'électro-aimant 13 désactivant le couple de rappel en roulis de la suspension de ladite toupie par l'intermédiaire d'un relais 25 temporisé par exemple à 3 secondes,

— à l'électro-aimant d'activation 20 de l'érecteur, par l'intermédiaire d'un relais temporisé 26, par exemple à 30 secondes.

Ainsi, lorsque l'alimentation 23 est activée par la commande 24, elle délivre un courant au moteur 4 de la toupie 1, puis à l'électro-aimant 13 désactivant le couple de rappel en roulis avec 3 secondes de retard, puis à l'électro-aimant d'activation 20 dudit érecteur avec 30 secondes de retard.

Il en résulte alors un fonctionnement permettant de réduire le temps de mise à poste du gyroscope dans de grandes proportions (2 minutes au lieu de 10 minutes), résultat obtenu habituellement avec un matériel très sophistiqué dont le prix peut atteindre vingt fois celui d'un matériel comprenant l'équipement selon l'invention.

Le dispositif selon l'invention peut être monté facilement sur tout gyroscope non prévu pour le recevoir, et notamment sur les gyroscopes simples du commerce présentant originellement un temps de mise à poste prohibitif pour utilisation sur missiles.

## Revendications

1. Procédé pour la mise à poste d'un dispositif gyroscopique monté sur un mobile, tel qu'un missile, et comportant une masse de révolution (1) tournant autour d'un axe de rotation (Z-Z') devant servir de référence à la verticale (V-V'), des moyens de suspension de ladite masse permettant de suspendre ledit axe de rotation (Z-Z') par rapport à l'axe de tangage (Y-Y') et à l'axe de roulis (X-X') dudit mobile, des moyens moteurs (4) pour entraîner ladite masse de révolution (1) en rotation autour de son axe (Z-Z'), des moyens (8, 9, 13) de rappel en roulis dudit axe de rotation (Z-Z') actifs lorsque ladite masse (1) ne tourne pas, et un système érecteur mécanique (15, 17, 18, 19) commandable à pendule rotatif entraîné (15), tendant à replacer automatiquement l'axe de rotation (Z-Z') de la masse de révolution (1) sur la verticale, procédé selon lequel on ne supprime l'action desdits moyens de rappel en roulis (8, 9, 13) qu'avec un premier temps de retard par rapport à la mise en rotation de ladite masse de révolution (1), caractérisé en ce que l'on commence par mettre en rotation la masse de révolution (1) et on accélère cette rotation jusqu'à ce que le moment cinétique de la masse (1) en rotation soit suffisant pour assurer la stabilité de celle-ci, après quoi on supprime l'action desdits moyens de rappel en roulis (8, 9, 13) à l'expiration dudit premier temps de retard et en ce que ledit système érecteur (15, 17, 18, 19) n'est rendu actif qu'avec un second temps de retard par rapport à la mise en rotation de ladite masse de révolution (1), ce second temps de retard étant plus grand que le premier et étant tel qu'à son expiration le moment cinétique et la vitesse de rotation du pendule (15) sont suffisants pour réduire le mouvement du dispositif autour de son axe de roulis (X-X'), dû au mouvement de précession de l'axe de rotation (Z-Z') de la masse de révolution (1) autour de la verticale (V-V').

2. Dispositif gyroscopique pour la mise en œuvre du procédé de la revendication 1, monté sur un mobile, tel qu'un missile, et comportant une masse de révolution (1) tournant autour d'un axe de rotation (Z-Z') devant servir de référence à la verticale (V-V'), des moyens de suspension de ladite masse permettant de suspendre ledit axe de rotation (Z-Z') par rapport à l'axe de tangage (Y-Y') et à l'axe de roulis (X-X') dudit mobile, des moyens moteurs (4) pour entraîner ladite masse de révolution (1) en rotation autour de son axe (Z-Z'), des moyens (8, 9, 13) de rappel en roulis dudit axe de rotation (Z-Z') actifs lorsque ladite masse (1) ne tourne pas et un système érecteur (15, 17, 18, 19) mécanique à pendule rotatif entraîné (15), tendant à replacer automatiquement l'axe de rotation (Z-Z') de la masse (1) sur la verticale, dispositif dans lequel lesdits moyens moteurs (4) et lesdits moyens de rappel (8, 9, 13) sont électriques, caractérisé en ce que le système érecteur (15, 17, 18, 19) comporte des moyens de commande électrique (20), en ce que les moyens moteurs (4), les moyens de rappel (8, 9, 13) et les moyens de commande (20) dudit système érecteur (15, 17, 18, 19) sont commandés en parallèle à partir d'une source d'alimentation commune (23), en ce qu'un premier dispositif à retard (25) est disposé sur la liaison entre ladite source (23) et lesdits moyens de rappel en roulis (8, 9, 13), ce premier retard étant tel qu'à son expiration le moment cinétique de la masse en rotation (1) est suffisant pour assurer la stabilité de celle-ci, et en ce qu'un second dispositif à retard (26) est disposé sur la liaison entre ladite source (23) et lesdits moyens de commande (20) du système érecteur, ce second retard étant tel qu'à son expiration la vitesse de rotation du pendule (15) est suffisante pour réduire le mouvement de précession du dispositif autour de son axe de roulis.

### Claims

1. Process for setting up a gyroscopic device mounted on a moving craft, such as a missile, and comprising a mass of revolution (1) rotating about an axis of rotation (Z-Z') having to serve as vertical reference (V-V'), means for suspending said mass allowing said axis of rotation (Z-Z') to be suspended with respect to the pitch axis (Y-Y') and to the roll axis (X-X') of said moving craft, drive means (4) for driving said mass of revolution (1) in rotation about its axis (Z-Z'), means (8, 9, 13) for resetting said axis of rotation (Z-Z') in roll when said mass (1) does not rotate, and a mechanical erector system (15, 17, 18, 19) with driven rotary pendulum (15), tending automatically to reset the axis of rotation (Z-Z') of the mass (1) on the vertical, wherein the action of said roll reset means (8, 9, 13) is eliminated only with a first delay with respect to the rotation of said mass (1), characterized in that said mass of revolution (1) is firstly rotated and accelerated until the kinetic moment of the mass (1) in rotation is sufficient to ensure the stability thereof, after what the action of said roll reset means (8, 9, 13) is eliminated at the end of said first delay time and in that said erector system (15, 17, 18, 19) is activated only with a second delay with respect to the rotation of said mass of revolution (1), this second delay time being greater than said first delay and being such that, on its expiration, the kinetic moment and the rotation speed of pendulum (15) are sufficient to reduce the movement of the device about its roll axis (X-X') due to the precession movement of the axis of rotation (Z-Z') of the mass (1) about the vertical (V-V').

2. Gyroscopic device for carrying out the process of claim 1, mounted on a moving craft, such as a missile, and comprising a mass of revolution (1) rotating about an axis of rotation (Z-Z') having to serve as vertical reference (V-V'), means for suspending said mass allowing said axis of rotation (Z-Z') to be suspended with respect to the pitch axis (Y-Y') and to the roll axis (X-X') of said moving craft, drive means (4) for driving said mass of revolution (1) in rotation about its axis (Z-Z') and means (8, 9, 13) for resetting said axis of rotation (Z-Z') into roll when said mass (1) does not rotate and a mechanical erector system (15, 17, 18, 19) with driven rotary pendulum (15), tending automatically to reset the axis of rotation (Z-Z') of the mass (1) on the vertical, device wherein said drive means (4) and said reset means (8, 9, 13) are electrical, characterized in that the erector system (15, 17, 18, 19) comprises electrical control means (20), in that the drive means (4), the reset means (8, 9, 13) and the control means (20) of said erector system (15, 17, 18, 19) are controlled in parallel from a common source of supply (23), in that a first delay device (25) is disposed on the link between said source (23) and said roll reset means (8, 9, 13), this first delay being such that, on its expiration, the kinetic moment of the mass (1) in rotation is sufficient to ensure the stability thereof, and in that a second delay device (26) is disposed on the link between said source (23) and said means (20) controlling the erector system, this second delay being such that, upon its expiration, the speed of rotation of the pendulum (15) is sufficient to reduce the movement of precession of the device about its roll axis.

### Ansprüche

1. Verfahren zum Inbetriebsetzen eines in einem Flugkörper wie einer Rakete eingesetzten Gyroskops bestehend aus einer Schwungmasse, die um eine als Bezugsvertikale (V-V') dienende Gierachse (Z-Z') rotiert, einer zum Aufhängen der Masse dienenden Einrichtung, durch die die Gierachse (Z-Z') gegenüber der Nickachse (Y-Y') und der Rollachse (X-X') des Flugkörpers aufgehängt werden kann, einer Antriebseinrichtung (4), durch die die Schwungmasse (1) um ihre Achse (Z-Z') in Drehung versetzt wird, eine Einrichtung (8, 9, 13) zum Zurückführen der Gierachse (Z-Z') bei nicht drehender Masse (1), und einem mechanischen Aufrichtsystem (15, 17, 18, 19), das durch ein angetriebenes Drehpendel (15) steuerbar ist, und das die Gierachse (Z-Z') der Schwungmasse (1) in die Vertikale ausrichtet, wobei mit diesem Verfahren die Wirkung der Einrichtung (8, 9, 13) nur mit einer ersten zeitlichen Verzögerung gegenüber dem Versetzen der Schwungmasse (1) in Drehung unterdrückt wird, dadurch gekennzeichnet, daß damit begonnen wird, die Schwungmasse (1) in Drehung zu versetzen und diese Drehung soweit beschleunigt wird, bis das kinetische Moment der in Drehung befindlichen Masse (1) zur Sicherung ihrer Stabilität ausreicht, wonach die Wirkung der Einrichtung (8, 9, 13) bei Ablauf der ersten zeitlichen Verzögerungen unterdrückt wird, und daß das Aufrichtsystem (15, 17, 18, 19) nur mit einer zweiten zeitlichen Verzögerung gegenüber dem Versetzen der Schwungmasse (1) in Drehung wirksam wird, wobei diese zweite zeitliche Verzögerung größer ist als die erste und derart bemessen ist, daß bei deren Ablauf das kinetische Moment und die Drehgeschwindigkeit des Pendels (15) ausreichen die Bewegung der Vorrichtung um ihre Rollachse (X-X'), die bedingt ist durch die Präzessionsbewegung der Gierachse (Z-Z') der Schwungmasse (1) um die Vertikale (V-V'), zu verringern.

2. Gyroskop zum Durchführen des Verfahrens nach Anspruch 1, das in einem Flugkörper wie einer Rakete eingesetzt ist und aus einer Schwungmasse (1), die um eine als Bezug zur Vertikalen (V-V') dienenden Gierachse (Z-Z') rotiert, einer zum Aufhängen der Masse dienenden Einrichtung, durch die die Gierachse (Z-Z') gegenüber der Nickachse (Y-Y') und der Rollachse (X-X') des Flugkörpers aufgehängt werden kann, einer Antriebseinrichtung (4), durch die Schwungmasse (1) um ihre Achse (Z-Z') in Drehung versetzt wird, einer Einrichtung (8, 9, 13) der wirksamen Gierachse (Z-Z') bei nicht drehender Masse (1) und einem mechanischen Aufrichtsystem (15, 17, 18, 19) besteht, das durch ein angetriebenes Drehpendel (15) steuerbar ist und die Gierachse (Z-Z') der Schwungmasse (1) in die Vertikale ausrichtet, wobei die Antriebseinrichtung (4) und die Einrichtung (8, 9, 13) der Vorrichtung elektrisch arbeiten, dadurch gekennzeichnet, daß das Aufrichtsystem (15, 17, 18, 19) eine elektrische Steuerung (20) aufweist; daß die Antriebseinrichtung (4), die Einrichtung (8, 9, 13) und die Steuerung (20) des Aufrichtsystems (15, 17, 18, 19) ausgehend von einer gemeinsamen Speisequelle (23) parallel gesteuert werden, daß eine erste Verzögerungsvorrichtung (25) auf der Verbindungsleitung zwischen der Quelle (23) und der Einrichtung (8, 9, 13) liegt, wobei die erste Verzögerung derart beschaffen ist, daß bei deren Ablauf das kinetische Moment der Schwungmasse (1) zur Sicherung ihrer Stabilität ausreicht, und das eine zweite Verzögerungsvorrichtung (26) auf der Verbindungsleitung zwischen der Quelle (23) und der Steuerung (20) des Aufrichtsystems liegt, wobei die zweite Verzögerung derart beschaffen ist, daß bei deren Ablauf die Drehgeschwindigkeit des Pendels (15) zur Verringerung der Präzessionsbewegung der Vorrichtung um seine Rollachse ausreicht.

*Fig:1*

*Fig:2*

*Fig:3*

Fig:4

Fig:5

Fig:6